(19) **Europäisches Patentamt**

**European Patent Office**

**Office européen des brevets**

(11) Veröffentlichungsnummer : **0 072 892**
**B1**

# (12) EUROPÄISCHE PATENTSCHRIFT

(45) Veröffentlichungstag der Patentschrift :
**19.12.84**

(21) Anmeldenummer : **82104467.4**

(22) Anmeldetag : **21.05.82**

(51) Int. Cl.³ : **G 01 M 3/20, F 04 D 19/04**

(54) **Für die Durchführung der Gegenstrom-Lecksuche geeignete Turbomolekularpumpe.**

(30) Priorität : **26.08.81 DE 3133781**

(43) Veröffentlichungstag der Anmeldung :
**02.03.83 Patentblatt 83/09**

(45) Bekanntmachung des Hinweises auf die Patenterteilung : **19.12.84 Patentblatt 84/51**

(84) Benannte Vertragsstaaten :
**CH FR GB IT LI**

(56) Entgegenhaltungen :
**DE-A- 1 648 648**
**DE-A- 1 937 271**
**DE-A- 2 049 117**

(73) Patentinhaber : **Leybold-Heraeus GmbH**
**Bonner Strasse 504 Postfach 51 07 60**
**D-5000 Köln 51 (DE)**

(72) Erfinder : **Reich, Günter, Dr.**
**Vochemer Strasse 9**
**D-5000 Köln 51 (DE)**

(74) Vertreter : **Leineweber, Jürgen, Dipl.-Phys.**
**Bonner Strasse 498 Postfach 51 07 60**
**D-5000 Köln 51 (DE)**

EP 0 072 892 B1

**Beschreibung**

Die Untersuchung von Prüflingen auf Dichtheit kann dadurch erfolgen, daß der Prüfling evakuiert und von außen mit Testgas besprüht wird. Bei kleineren Prüflingen ist es bekannt, diese mit Testgas zu füllen und in einen Rezipienten einzubringen, welcher dann evakuiert wird. Dringt Testgas durch die Wandung eines Prüflings, dann ist dieser undicht. Mit Hilfe eines Testgasdetektors, der an die Evakuierungsleitung angeschlossen ist, kann die Tatsache des Vorliegens eines undichten Prüflings festgestellt werden. Als Testgasdetektor wird dabei häufig ein Massenspektrometer verwendet, das auf das Testgas, vorzugsweise Helium, also auf die Masse 4, eingestellt ist. Massenspektrometer können jedoch nur bei einem Druck $< 1 \times 10^{-3}$ mbar, vorzugsweise $\leq 1 \times 10^{-4}$ mbar, betrieben werden, während der Druck, bei dem die Lecksuche stattfindet, wesentlich höher sein kann. Es ist deshalb bekannt, die das Massenspektrometer evakuierende Hochvakuumpumpe im Gegenstrom vom Testgas durchströmen zu lassen (vgl. z. B. die DE-19 37 271).

Um ein hohes Saugvermögen am Prüfling zur Verkürzung der Einstellzeit ohne Reduzierung der Empfindlichkeit zu erreichen, ist es zweckmäßig, die Lecksuche bei Drücken zu betreiben, die auch für die Evakuierung des Prüflings bzw. Prüfrezipienten den Einsatz an einer Hochvakuumpumpe erfordern. Aus den deutschen Offenlegungsschriften 16 48 648 und 20 49 117 ist es bekannt, dazu eine Turbomolekularpumpe mit zwei Pumpstufen zu verwenden, von denen die eine der Evakuierung eines Massenspektrometers und die andere der Evakuierung des Prüflings bzw. Prüfrezipienten dient. Bei diesen Turbomolekularpumpen sind der Anschluß des Prüfgefäßes und der Anschluß für das Massenspektrometer zwischen den beiden axial hintereinander angeordneten Pumpstufen angeschlossen, während sich an den äußeren Enden der beiden Pumpstufen die Vorvakuumanschlüsse befinden, die über ein außerhalb des Pumpengehäuses befindliches Leitungssystem zusammengeführt und an eine gemeinsame Vorvakuumpumpe angeschlossen sind. Bei diesen vorbekannten Ausführungsformen, bei denen also die beiden auf einer Achse liegenden Pumpstufen von innen nach außen durchströmt werden, bestehen relativ große Schwierigkeiten, den Anschluß des Prüfgefäßes von dem Anschluß des Massenspektrometers zu trennen. Beim Gegenstand der DE-A-16 48 648 ist dazu eine gesonderte Pumpstufe mit mehreren Schaufelreihen erforderlich, die eine gasdichte Labyrinthdichtung bilden soll. Beim Gegenstand der DE-A-20 49 117 soll das Ziel der Abdichtung durch eine « praktisch gasundurchlässige Trennwand » erreicht werden. Die Realisierung einer derartigen Trennwand ist technisch aufwendig, da sie im Hochvakuum liegt und gegen eine zentrale Welle abgedichtet werden muß. Weiterhin ist bei den vorbekannten Ausführungsformen nachteilig, daß das zu registrierende Testgas einen relativ langen Weg zurücklegen muß, und zwar vom Anschluß des Prüfgefäßes durch die der Evakuierung des Prüfgefäßes dienende Stufe, durch das außerhalb des Pumpengehäuses liegende Vorvakuum-Leitungssystem — teilweise im Gegenstrom — und schließlich im Gegenstrom durch die der Evakuierung des Massenspektrometers dienende Pumpstufe, was insgesamt die Empfindlichkeit der Lecksuche beeinträchtigt.

Der vorliegenden Erfindung liegt die Aufgabe zugrunde, eine für die Durchführung der Gegenstromlecksuche geeignete Turbomolekularpumpe wesentlich einfacher zu gestalten.

Erfindungsgemäß wird diese Aufgabe dadurch gelöst, daß die Anschlüsse für das Massenspektrometer und für den Prüfling bzw. Prüfrezipienten derart einander gegenüberliegend im Bereich der äußeren Stirnseiten des Pumpsystems angeordnet sind, daß die beiden Pumpstufen während des Betriebes von außen nach innen durchströmt sind und daß zwischen den beiden Pumpstufen ein gemeinsamer Vorvakuumanschluß vorgesehen ist.

Bei einer in dieser Weise ausgebildeten, für die Durchführung der Gegenstromlecksuche geeigneten Turbomolekularpumpe treten Schwierigkeiten der Abdichtung der beiden Pumpen nicht mehr auf. Der vom Testgas zurückzulegende Weg ist optimal kurz. Schließlich ist nur noch ein Vorvakuumanschluß erforderlich, so daß das außerhalb des Gehäuses liegende Leitungssystem entfallen kann.

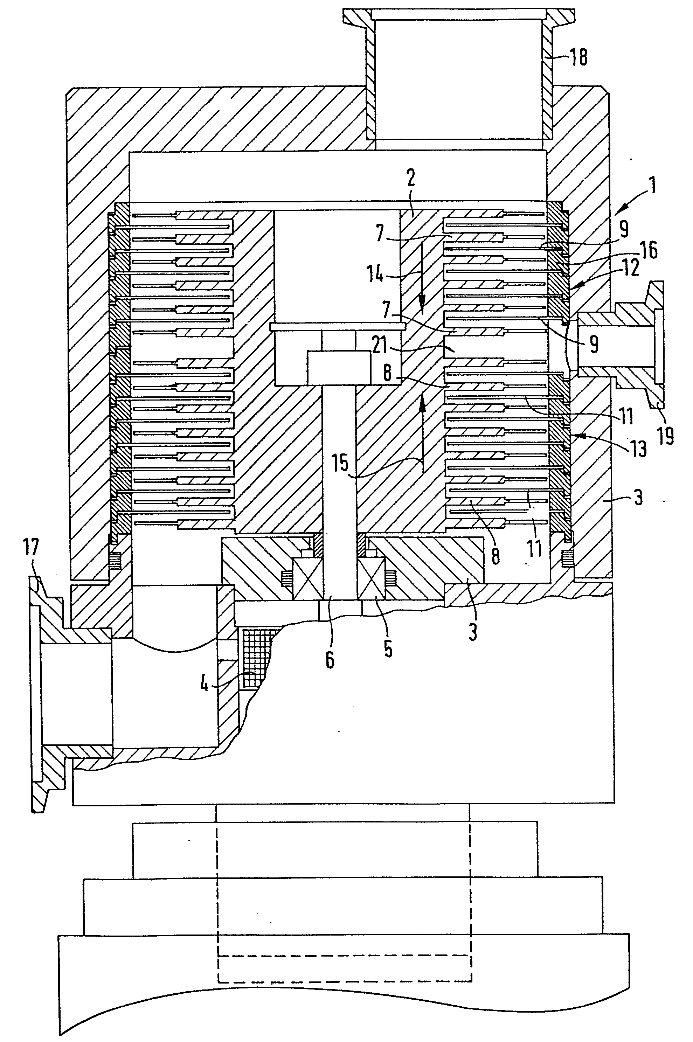

Weitere Vorteile und Einzelheiten der Erfindung sollen anhand eines in der Figur schematisch dargestellten Ausführungsbeispieles erläutert werden. Die Figur zeigt lediglich den für die Realisierung der Erfindung wesentlichen Teil der Turbomolekularpumpe im Schnitt.

Die dargestellte Turbomolekularpumpe 1 weist einen Rotor 2 auf, der einseitig, d. h. fliegend, im Gehäuse 3 gelagert und mittels des Motors 4 antreibbar ist. Sichtbar ist nur ein schematisch dargestelltes Lager 5 für die Welle 6 des Rotors. Dieses kann als Wälzlager oder als Magnetlager ausgebildet sein.

Der Rotor 2 trägt Rotorschaufelscheiben 7 und 8, die mit entsprechenden Statorschaufelscheiben 9 und 11 zwei Pumpstufen 12 und 13 bilden, deren Pumprichtung durch die Pfeile 14 und 15 (von außen nach innen) gekennzeichnet ist. Die Statorschaufelscheiben 9 und 11 sind mittels Distanzringen 16 im Gehäuse 3 der Turbomolekularpumpe gehalten.

Das Gehäuse 3 der Turbomolekularpumpe 1 weist insgesamt drei Anschlüsse 17, 18 und 19 auf. Die Anschlüsse 17 und 18 liegen im Bereich der äußeren Stirnseiten des von den beiden Pumpstufen 12 und 13 gebildeten Pumpsystems. Zwischen den beiden Pumpsystemen befindet sich der gemeinsame Vorvakuumanschluß 19. Im Bereich des Vorvakuumanschlusses 19 fehlt eine Statorschaufelscheibe, so daß ein Zwischenraum 21 entsteht, der die beiden Pumpstufen 12 und 13 voneinander trennt.

Es ist an sich bekannt, daß die Pumpeigenschaften einer Turbomolekularpumpe insbesondere durch den Anstellwinkel und den Abstand der Schaufeln beeinflußt werden kann. Je nachdem, an welchen der beiden Anschlüsse 17 und 18 der Prüfling oder das Massenspektrometer angeschlossen sind, sollten die beiden Pumpstufen 12 und 13 unterschiedliche Pumpeigenschaften haben. Falls das Lager 5 als Wälzlager ausgebildet ist, könnte es zweckmäßig sein, an den Anschluß 17 den Prüfling und an den Anschlußstutzen 18 das Massenspektrometer anzuschließen. Es ist dann nicht erforderlich, im Bereich des Lagers den besonders niedrigen, für den Betrieb des Massenspektrometers notwendigen Druck zu erzeugen, so daß es nicht zu Störungen durch aus dem Lagerraum dringende Schmiermitteldämpfe kommt. Diese Überlegungen sind jedoch dann hinfällig, wenn entweder Schmiermitteldämpfe vollständig absorbierende Axialdichtungen oder ein solches Massenspektrometer verwendet wird, das gegen derartige Störungen nicht anfällig ist, oder wenn das Lager 5 als Magnetlager ausgebildet ist. In beiden Fällen ist dann auch eine fliegende Lagerung des Rotors nicht erforderlich.

Da der von der am Anschlußstutzen 19 angeschlossenen Vorvakuumpumpe erzeugte Druck gleich oder kleiner 0,2 mbar ist, hat die Pumpstufe 13 die Aufgabe, den mit dem Anschlußstutzen 17 verbundenen Prüfling bzw. Prüfrezipienten zu evakuieren, und zwar vorzugsweise auf einen Druck < 0,1 mbar. Außerdem soll diese Pumpstufe das Testgas besonders gut fördern können. Die Pumpstufe 13 muß deshalb ein möglichst hohes Saugvermögen und Kompressionsvermögen für das Testgas haben, damit die Lecksuche schnell und sicher durchgeführt werden kann.

Bezüglich der Pumpstufe 12 besteht die Forderung, das an den Anschlußstutzen 18 angeschlossene Massenspektrometer auf einen Druck von mindestens $10^{-4}$ mbar evakuieren zu können und das Testgas im Gegenstrom möglichst ungehindert durchzulassen. Deshalb sollte diese Pumpstufe 12 ein für die Evakuierung des Massenspektrometers ausreichendes Saugvermögen und ein für das Testgas niedriges Kompressionsvermögen haben.

Als besonders vorteilhaft für die Erfüllung der beschriebenen Forderungen an die beiden Pumpstufen 12 und 13 hat es sich deshalb erwiesen, wenn die für die Evakuierung des Prüflings bzw. Prüfrezipienten dienende Pumpstufe mehr Schaufelreihen hat als die der Evakuierung des Massenspektrometers dienende, im Gegenstrom für das Testgas betriebene Pumpstufe.

Ein besonderer Vorteil der vorliegenden Erfindung liegt darin, daß die Durchführung der Lecksuche mit der beschriebenen Turbomolekularpumpe bei den unterschiedlichsten Umständen besonders einfach ist. So können z. B. durch Veränderung der Drehzahl des Rotors der Turbomolekularpumpe die jeweils gewünschten Pumpeigenschaften (Saugvermögen, Kompressionsvermögen) der Pumpstufen 12, 13 eingestellt werden. Auch die Kalibrierung der Empfindlichkeit des mit der Turbomolekularpumpe betriebenen Lecksuchgerätes kann über die Einstellung der Drehzahl des Rotors 2 erfolgen. Die Kalibrierung der Empfindlichkeit kann auch dadurch erfolgen, daß das effektive Saugvermögen der Vorpumpe am Anschlußstutzen 19 einstellbar ausgebildet ist. Das kann z. B. durch Maßnahmen an der Vorpumpe selbst oder mit Hilfe eines einstellbaren Drosselventils geschehen.

Dadurch ist auch die Einstellung optimaler Werte bei verschiedenen Testgasen möglich. Als Testgase können deshalb alle leichten Gase mit einer Masse kleiner/gleich 20, z. B. $H_2$, $D_2$, HD, TH, TD, $T_2$, $He^3$, $He^4$, $CH_4$, Ne oder dgl., verwendet werden.

## Ansprüche

1. Für die Durchführung der Gegenstrom-Lecksuche geeignet gestaltete Turbomolekularpumpe (1) mit einem Pumpsystem, das aus zwei axial hintereinander angeordneten, in entgegengesetzter Richtung betriebenen Pumpstufen (12, 13) besteht, von denen die eine der Evakuierung eines Massenspektrometers und die andere der Evakuierung eines Prüflings oder eines Prüfrezipienten dient, dadurch gekennzeichnet, daß die Anschlüsse (17, 18) für das Massenspektrometer und für den Prüfling bzw. Prüfrezipienten derart einander gegenüberliegend im Bereich der äußeren Stirnseiten des Pumpsystems angeordnet sind, daß die beiden Pumpstufen (12, 13) während des Betriebs von außen nach innen durchströmt sind, und daß zwischen den beiden Pumpstufen ein gemeinsamer Vorvakuumanschluß (19) vorgesehen ist.

2. Turbomolekularpumpe nach Anspruch 1, dadurch gekennzeichnet, daß der Rotor (2) des Pumpsystems mittels Magnetlagern gelagert ist.

3. Turbomolekularpumpe nach Anspruch 1 oder 2, dadurch gekennzeichnet, daß der Rotor (2) der Pumpe fliegend gelagert ist und daß auf der Lagerseite der Anschluß (17) für den Prüfling bzw. Prüfrezipienten liegt.

4. Turbomolekularpumpe nach einem der vorhergehenden Ansprüche, dadurch gekennzeichnet, daß die der Evakuierung des Prüflings bzw. Prüfrezipienten dienende Pumpstufe (13) ein größeres Kompressionsvermögen für das Testgas, vorzugsweise Helium, hat als die der Evakuierung des Massenspektrometers dienende Pumpstufe (12).

5. Turbomolekularpumpe nach einem der vorhergehenden Ansprüche, dadurch gekennzeichnet, daß die der Evakuierung des Prüflings bzw. Prüfrezipienten dienende Pumpstufe (13) ein größeres Saugvermögen für das Testgas, vorzugsweise Helium, hat als die der Evakuierung des Massenspektrometers dienende Pumpstufe (12).

6. Turbomolekularpumpe nach Anspruch 4 oder 5, dadurch gekennzeichnet, daß die Anzahl der Schaufelscheiben (11) der der Evakuierung des Prüflings bzw. Prüfrezipienten dienenden Pumpstufe (13) größer ist als die Anzahl der Schaufelscheiben (9) der der Evakuierung des Massenspektrometers dienenden Pumpstufe (12).

**Claims**

1. A turbo-molecular pump (1) suitably designed for carrying out counter-flow leakage detection and comprising a pump system which consists of two pump stages (12, 13) which are arranged axially one behind the other and are operated in opposite directions, and one of which serves to evacuate a mass spectrometer and the other to evacuate a test sample or test container, which pump is characterized in that the connections (17, 18) for the mass spectrometer and for the test sample or test container are arranged opposite each other in the zone of the outer end faces of the pump system in such manner that during operation flow occurs inwardly through the two pump stages (12, 13), and in that a common low vacuum connection (19) is provided between the two pump stages.

2. A turbo-molecular pump according to Claim 1, characterized in that the rotor (2) of the pump system is mounted on magnetic bearings.

3. A turbo-molecular pump according to Claim 1 or Claim 2, characterized in that the rotor (2) of the pump is mounted only at one of its ends, and in that the connection (17) for the test sample or test container is disposed at the mounting end.

4. A turbo-molecular pump according to any one of the preceding Claims, characterized in that the pump stage (13) used for evacuating the test sample or test container has a greater capacity for compressing the test gas, preferably helium, than the pump stage (12) used for evacuating the mass spectrometer.

5. A turbo-molecular pump according to any one of the preceding Claims, characterized in that the pump stage (13) used for evacuating the test sample or test container has a greater suction capacity as regards the test gas, preferably helium, than the pump stage (12) used for evacuating the mass spectrometer.

6. A turbo-molecular pump according to Claim 4 or Claim 5, characterized in that the number of impeller discs (11) of the pump stage (13), used for evacuating the test sample or test container, is greater than the number of impeller discs (9) of the pump stage (12) used for evacuating the mass spectrometer.

**Revendications**

1. Pompe turbomoléculaire (1) construite pour permettre la recherche de fuites à contre-courant, comprenant un système de pompage formé de deux étages de pompage (12, 13) disposés axialement l'un derrière l'autre et travaillant sens contraire, dont l'un sert à l'évacuation d'un spectromètre de masse et l'autre à l'évacuation d'un corps creux à contrôler ou d'un récipient d'essai, caractérisée en ce que les raccords (17, 18) pour le spectromètre de masse et pour le corps à contrôler ou le récipient d'essai sont disposés l'un à l'opposé de l'autre dans les régions des côtés extrêmes extérieurs du système de pompage, de sorte que les deux étages de pompage (12, 13) sont parcourus de l'extérieur vers l'intérieur pendant le service, et qu'un raccord commun (19) pour le vide préliminaire est prévu entre les deux étages.

2. Pompe turbomoléculaire selon la revendication 1, caractérisée en ce que le rotor (2) du système de pompage est monté rotatif par des paliers magnétiques.

3. Pompe turbomoléculaire selon la revendication 1 ou 2, caractérisée en ce que le rotor (2) de la pompe est monté en porte-à-faux et en ce que le raccord (17) pour le corps à contrôler ou pour le récipient d'essai est situé du côté du palier.

4. Pompe turbomoléculaire selon une des revendications précédentes, caractérisée en ce que l'étage de pompage (13) servant à l'évacuation du corps à contrôler ou du récipient d'essai possède une plus grande capacité de compression pour le gaz traceur, l'hélium de préférence, que l'étage de pompage (12) servant à l'évacuation du spectromètre de masse.

5. Pompe turbomoléculaire selon une des revendications précédentes, caractérisée en ce que l'étage de pompage (13) servant à l'évacuation du corps à contrôler ou du récipient d'essai possède une plus grande capacité d'aspiration pour le gaz traceur, l'hélium de préférence, que l'étage de pompage (12) servant à l'évacuation du spectromètre de masse.

6. Pompe turbomoléculaire selon la revendication 4 ou 5, caractérisée en ce que le nombre des disques à aubes (11) de l'étage (13) pour l'évacuation du corps à contrôler ou du récipient d'essai est plus élevé que le nombre des disques à aubes (9) de l'étage (12) pour l'évacuation du spectromètre de masse.